# EUROPÄISCHE PATENTSCHRIFT

(11) **EP 0 422 176 B1**
(45) Veröffentlichungstag und Bekanntmachung des Hinweises auf die Patenterteilung: **14.02.1996**
(21) Anmeldenummer: 90906226.7
(22) Anmeldetag: 26.04.1990
(51) Int. Cl.: C08B 33/00, C08L 3/14, C08J 5/18

(54) **STÄRKEDERIVATE UND IHRE VERWENDUNG ZUR HERSTELLUNG BIOLOGISCH ABBAUBARER KUNSTSTOFFE**
STARCH DERIVATIVES AND THEIR USE IN THE PRODUCTION OF BIOLOGICALLY DEGRADABLE PLASTICS
DERIVES D'AMIDON ET LEUR UTILISATION POUR LA PRODUCTION DE MATIERES PLASTIQUES BIODEGRADABLES

(30) Priorität: 29.04.1989 DE 3914350
(43) Veröffentlichungstag der Anmeldung: 17.04.1991
(73) Patentinhaber: EMS-INVENTA AG, CH-8001 Zürich (CH)
(72) Erfinder: FRISCHE, Rainer, D-6000 Frankfurt am Main (DE); WOLLMANN, Klaus, D-6250 Limburg 7 (DE); GROSS-LANNERT, Renate, D-6057 Dietzenbach (DE); SCHNEIDER, Judith, D-6238 Hofheim (DE); BEST, Bernd, D-6082 Mörfelden (DE)
(74) Vertreter: Rucker, Ernst, Dr.
(86) Internationale Anmeldenummer: EP9000675
(87) Internationale Veröffentlichungsnummer: WO9013576

(56) Entgegenhaltungen:
- GB-A- 869 192
- GB-A- 965 349
- US-A- 2 656 571
- US-A- 2 822 581
- US-A- 3 117 014
- US-A- 3 312 641
- US-A- 3 314 810
- US-A- 3 549 619
- US-A- 4 626 288
- W. B. Roth und C. L. Mehltretter, Food Technology, vol. 21, Januar 1967, 72-74

## Beschreibung

Die Erfindung betrifft Stärkederivate und ihre Verwendung zur Herstellung von biologisch abbaubaren, klaren, transparenten und flexiblen Kunststoffen.

Der Einsatz und die Nutzung nativer Grundstoffe und deren Verwertung zu technischen Produkten hat bisher nur eine - geringe Bedeutung erlangt, obgleich diese Grundstoffe in ausreichender Menge und auch zu akzeptablen Preisen erhältlich sind. Besonders unter umweltpolitischen Gesichtspunkten ist jedoch zu erwarten, daß diese sogenannten nachwachsenden Rohstoffe in Zukunft eine zunehmende Bedeutung erlangen werden.

Einen in dieser Hinsicht besonders interessanten Rohstoff stellen die in ausreichenden Mengen erhältlichen und aus den verschiedensten Quellen gewinnbaren Stärken dar. Die Stärke setzt sich aus den beiden Komponenten Amylose und Amylopektin zusammen. Beide Komponenten stellen Polymere dar, die aus einzelnen Glukoseeinheiten zusammengesetzt sind, wobei Kettenlänge und Molekulargewicht über einen weiten Bereich verteilt sind. Während Amylopektin jedoch eine verzweigtkettige Molekülstruktur aufweist, stellt Amylose ein langgestrecktes Kettenmolekül dar. Stärke bietet daher schon von ihrer Struktur her ideale Voraussetzungen, um als Rohstoff für technische Produkte eingesetzt zu werden.

Die filmbildenden Eigenschaften der Amylose sind seit längerem bekannt. Ein wesentlicher Nachteil dieser aus Amylose hergestellten Filme besteht jedoch in deren Sprödigkeit und geringer Elastizität. Dementsprechend sind die bekannten Amylosefilme nur wenig stabil, was sich negativ in einer mangelnden Knitterfestigkeit und Reißfestigkeit bemerkbar macht. Weitere Nachteile sind die unzureichende Transparenz, die rauhen Oberflächen und der hohe Aufwand, der zur Herstellung solcher Filme betrieben werden muß.

Es wurde bereits versucht, diese Nachteile durch Zusatz von Weichmachern, z.B. von Glycerin, Sorbit oder, wie in der DE-C- 17 45 680 beschrieben, von Polyvinylalkohol zu beheben, dennoch ließen sich die Produkteigenschaften auf diese Weise nicht so zufriedenstellend verbessern, daß diese Verfahren eine größere technische Bedeutung erlangt hätten. Zudem muß nach dem Verfahren der DE-C- 17 45 680 die Amyloselösung heiß auf eine beheizte Unterlage gegeben oder durch eine Düse in ein koagulierendes Bad, das Säure oder Salze zum Ausfällen des Amylosefilms enthält, gepreßt werden.

Zur Herstellung von Kunststoffen wird auch die Verwendung chemisch modifizierter Amylose beschrieben. So beschreiben die GB-A- 965 349 und die US-A- 3 117 014 Zusammensetzungen, die Hydroxyalkylamylosen oder andere derivatisierte Amylosen enthalten und die zur thermoplastischen Verarbeitung geeignet sind. Abgesehen davon, daß diese Zusammensetzungen lediglich zur Herstellung von Thermoplastfilmen gedacht sind, können jedoch auch die mit diesen Mischungen erhaltenen Filmeigenschaften bezüglich Transparenz und Handhabbarkeit noch keineswegs als ideal betrachtet werden. Daher haben auch diese Kunststoffe bisher in der Praxis keine Verwendung gefunden.

GB-B-869 192 beschreibt ein Verfahren zur Herstellung von Amylosederivaten, die aus reinen Amylosen als Ausgangsmaterial hergestellt werden. Insbesondere wird in dieser Patentschrift die Herstellung von Amyloseethern beschrieben, die in Wasser mit einer Temperatur unterhalb von 100°C löslich sind. Die reine Amylose wird in einer wäßrigen alkalischen Lösung mit einem pH oberhalb von 13 verethert. Die Hydroxylgruppen sollen in der Amylosekette zu einem bestimmten Grad in Ethergruppen umgewandelt werden.

Roth, W.B. et al., Food Technology, Bd. 21, Seiten 72-74 (1967) beschreiben eine Stärke mit einem Amylosegehalt von 71 %, die bis zu einem Substitutionsgrad D.S. von 0,031 hydroxypropyliert ist. Außerdem ist die Herstellung von Filmen beschrieben, die aus filtrierten wässerigen Glycerin-enthaltenden Lösungen gegossewerden.

Aufgabe der vorliegenden Erfindung ist es daher, Stärkederivate zur Verfügung zu stellen, wobei als Ausgangsmaterial keine reinen Amylosen verwendet werden sollen. Mit deren Hilfe soll es möglich sein, auf einfache Weise in ihren Eigenschaften verbesserte klare, transparente und flexible Kunststoffe und Formteile, insbesondere Folien und Filme zu erzeugen, die sich zudem vor allem durch ihre leichte biologische Abbaubarkeit auszeichnen, so daß ihre Beseitigung durch Kompostieren keine übermäßigen Schwierigkeiten und Probleme mehr verursacht.

Diese Aufgabe wird durch die Gegenstände der Ansprüche 1, 3, 7, 8, 10 bzw. 11 gelöst. Vorteilhafte Ausgestaltungen ergeben sich aus den Unteransprüchen.

Erfindungsgemäß wurde nunmehr festgestellt, daß die Verwendung ganz bestimmter Stärkederivate, nämlich solchen aus Stärken mit einem Amylosegehalt oberhalb von 65 Gew.-%, sowohl bei der Herstellung von Filmen und Folien in einem vereinfachten Gießverfahren als auch bei der Erzeugung thermoplastischer Formkörper zu Produkten mit gegenüber dem Stand der Technik außergewöhnlichen Eigenschaften führt, Eigenschaften, die bei Verwendung von herkömmlichen Amylosen nicht in gleicher Weise erzielt werden können.

Gegenstand der vorliegenden Erfindung sind daher Stärkederivate bzw. Verfahren zu deren Herstellung, die wie in dem entsprechenden Anspruch beschrieben gekennzeichnet sind. Ein weiterer Gegenstand ist ein vereinfachtes Verfahren zur Herstellung von Filmen und Folien auf Basis dieser Stärkederivate.

Bei den erfindungsgemäßen Stärkederivaten handelt es sich um komplizierte Mischungen unterschiedlicher chemischer Stoffe, vorrangig polymerer Glykosen wie Amylose und Amylopektin, die ein für Stärken und Amylosen außergewöhnliches Verhalten zeigen. Da diese Stärkederivate als natürliche Polymere mit statistischer Kettenlängenverteilung und breitgestreutem Molekulargewicht einer eindeutigen analytischen Strukturaufklärung naturgemäß nicht zugänglich sind, werden im folgenden unter Stärkederivate diejenigen aus Stärken erhältlichen Fraktionen verstanden, die durch das folgende Verhalten charakterisiert sind:
a) Sie sind in kaltem Wasser quellbar, aber nicht löslich;
b) sie ergeben beim Erhitzen unter Rühren oberhalb 80°C und unter Atmosphärendruck homogene fließfähige, für Stärke typische Quasilösungen, bilden also keine Gele, die bezüglich der Fließfähigkeit inhomogen sind. Dieser Zustand bleibt beim Abkühlen der Lösung auf eine Temperatur von 50°C ohne Retrogradation mindestens 5 Minuten erhalten. In einer Konzentration von 5 bis 25 Gew.-% ist eine solche Lösung auf einer planen Unterlage bei einer Spaltbreite von 100 bis 700 µm rakelfähig.

Die erfindungsgemäßen Stärkederivate können auf verschiedene Art und Weise und aus unterschiedlichen Quellen gewonnen werden. Erfindungsgemäß werden die Spezialamylosen aus High-Amylose-Maisstärken, d.h., Stärken mit einem Amylosegehalt oberhalb 65%, wie sie im Handel unter den Bezeichnungen Hylon VII (National Starch) oder Eurylon 7 (Roquette) erhältlich sind, oder aus High-Amylose-Erbsenstärken erhalten.

Bevorzugt werden die Stärkederivate aus oben genannten Stärken nach einem neu entwickelten Verfahren durch Behandlung mit Formamidlösung, die eine geringe Menge an Dichloressigsäure enthält, gewonnen. Der enorme Vorteil dieses erfindungsgemäßen Verfahrens liegt darin, daß sich die Stärke durch Behandlung mit Formamid/Dichloressigsäure in einem Schritt sowohl aufschließen, als auch chemisch verändern läßt, d.h. nach Zerstörung der Kornstruktur der Stärke wird insbesondere die Molekulargewichts- und Kettenlängenverteilung der Amylose durch Abbau verändert.

Erfindungsgemäß wird die Stärke in der 4- bis 6-fachen Menge Formamidlösung, die 2 Gew.-% Dichloressigsäure enthält, gelöst. Die Lösungstemperatur hängt im wesentlich von der Art der verwendeten Ausgangsstärke ab und liegt zwischen 130 und 180°C. Die Lösung wird zwischen 20 und 40 Minuten, vorzugsweise 30 Minuten lang, bei dieser Temperatur gehalten. Während dieser Zeit wird die Kornstärke aufgeschlossen und der Stärkeabbau beginnt.

Die Lösung wird anschließend während einer Zeit von 10 bis 20 Minuten langsam auf eine Temperatur zwischen 110 und 130°C, vorzugsweise auf 120°C, abgekühlt, und nochmals zwischen 20 und 40 Minuten, vorzugsweise 30 Minuten, bei dieser Temperatur gehalten. Hierbei erfolgt der Abbau zu den Molekulargewichts-und Kettenlängenverteilungen, die die für die erfindungsgemäßen Stärkederivate charakteristischen Eigenschaften bewirken. Der Endpunkt der Reaktion zeigt sich in einer leichten Verfärbung der Reaktionslösung.

Der weitere Stärkeabbau wird dadurch abgestoppt, daß die heiße Reaktionslösung auf Eiswasser gegossen wird. Zur Ausfällung des Reaktionsproduktes wird der Mischung eine ausreichende Menge eines Fällungsmittels, beispielsweise Methanol oder Ethanol, zugesetzt. Das Produkt wird in üblicher Art und Weise, beispielsweise durch Absaugen, abge-trennt. Zur Aufreinigung wird das Produkt in Wasser suspendiert, mit Aceton versetzt und erneut abgesaugt. Dieser Vorgang wird mehrmals wiederholt. Das Produkt besitzt nach dem Trocknen einen Feuchtegehalt zwischen 5 und 15%.

Die auf diese Weise erzeugten Stärkederivate besitzen Eigenschaften, die sich nach den üblichen Aufschluß- und Abbauverfahren nicht erhalten lassen.

Als Stärkederivate können erfindungsgemäß bestimmte Stärke-Hydroxyalkylderivate aus High-Amylose-Stärken verwendet werden. Die Herstellung solcher Hydroxyalkylderivate erfolgt nach bekannten Methoden, beispielsweise durch Derivatisierung in alkalischer Lösung, Derivatisierung in wäßrig-alkalischer Suspension oder nach dem Verfahren der GB-A- 869 192. Die Versuchsbedingungen werden hierbei in einer dem Fachmann bekannten Art und Weise so gewählt, daß Stärkederivate mit einem Substitutionsgrad zwischen 0,05 und 0,15 erhalten werden. Erfindungsgemäß werden als Ausgangsmaterial zur Herstellung der gewünschten derivatisierten Stärken wiederum die oben genannten High-Amylose-Stärken verwendet. Die Herstellung der erfindungsgemäßen Stärkederivate wird in den nachfolgenden Beispielen näher erläutert.

Bei der Verwendung zur Herstellung von Kunststoffen werden die Stärkederivate in einer Mischung mit geeigneten Weichmachern eingesetzt. Zur Lösung der erfindungsgemäßen Aufgabe geeignete Zusammensetzungen enthalten:
60 bis 97 Gew.-% Stärkederivat und
3 bis 40 Gew.-% eines Weichmachers.

Bevorzugt wird eine Zusammensetzung eingesetzt, die enthält:
70 bis 95 Gew.-% Stärkederivat und
5 bis 30 Gew.-% eines Weichmachers.

Besonders bevorzugt ist eine Zusammensetzung, die enthält:
80 bis 85 Gew.-% Stärkederivat und
15 bis 20 Gew.-% eines Weichmachers.

Als Weichmacher können die nach dem Stand der Technik bekannten Weichmacher, insbesondere mehrwertige Alkohole, eingesetzt werden. Bevorzugt eingesetzt werden Glycerin, Diethylenglykol, Triethylenglykol, Sorbit, Polyvinylalkohol, Zitronensäureoxidaddukt oder Gemische dieser Weichmacher.

Die erfindungsgemäßen Zusammensetzungen können sowohl zur thermoplastischen Ausformung von Formteilen als auch zur Ausformung von Folien und Filmen in Gießverfahren verwendet werden.

Die thermoplastische Ausformung von Formteilen unter Verwendung der erfindungsgemäßen Zusammensetzungen erfolgt in an sich bekannter Weise ähnlich wie bei anderen Thermoplasten nach gängigen Kunststoffverarbeitungsverfahren, beispielsweise durch Spritzguß, Extrusion, Blasformverfahren sowie thermoplastischen Formverfahren zur Folienherstellung. Die auf diese Weise erhaltenen Formkörper sind stabil und flexibel und weisen eine ausgezeichnete Transparenz auf.

Die oben beschriebenen Zusammensetzungen können erfindungsgemäß auch in einem neuen Verfahren zur Herstellung von Gießfolien verwendet werden, wobei diese Zusammensetzungen zunächst in einer ausreichenden Menge eines geeigneten Lösungsmittels gelöst und anschließend filtriert werden müssen. Zweckmäßig erfolgen Lösen und Filtrieren bei erhöhter Temperatur. Als Lösungsmittel eignen sich hierbei beispielsweise Alkohole, wäßriger Formaldehyd oder Dimethylsulfoxid. Bevorzugt wird jedoch als Lösungsmittel Wasser verwendet. Die Menge an Lösungsmittel wird zweckmäßig so gewählt, daß die Lösung einerseits noch gut handhabbar ist und andererseits die Entfernung des Lösungsmittels zur Ausbildung der Folien noch nicht zu aufwendig ist. Die Menge des Lösungsmittels wird daher in der Regel zwischen 70 und 100 Gew.- Teilen, bezogen auf das Gesamtgewicht der Zusammensetzung aus Stärkederivat und Weichmacher, betragen.

Die Filtration der in der Mischung aus Lösungsmittel und Weichmacher gelöstem Stärkederivat vor der Ausformung der Folie ist für die Herstellung der Filme und Folien in dem erfindungsgemäßen Gießverfahren außerordentlich bedeutsam, weil hierdurch offensichtlich alle Störstellen, Kristallite und Verunreinigungen von dem Stärkederivat eliminiert werden, die andernfalls eine Rekristallisation des Stärkederivats und damit eine Qualitätsverschlechterung der erzielten Folie oder des erzielten Filmes verursachen.

Die Ausbildung der Folie erfolgt nach der Filtration durch Ausgießen der zweckmäßig warmen Lösung auf eine Unterlage, und durch anschließende Entfernung des Lösungsmittels. Das Gießen der Folien erfolgt zweckmäßig auf planpolierten Materialien, beispielsweise auf Glasscheiben. Bevorzugt werden Polyesterfolien eingesetzt, weil sich auf diesen Materialien das Abziehen des Stärkederivatfilms besonders leicht durchführen läßt.

Der auf diese Weise gegossene Film wird zweckmäßig bei einer Temperatur von 20 bis 70°C getrocknet. Die Trockenoperation kann sowohl bei Normaldruck als auch bei vermindertem Druck durchgeführt werden.

Mit Hilfe dieses Verfahrens werden Folien erhalten, die sich nach dem Trocknen gut von der Unterlage ablösen lassen und sich durch eine ausgezeichnete Klarheit und Lichtdurchlässigkeit auszeichnen. Die Folien sind bei normaler Luftfeuchte ohne Nachtrübung (Retrogradation) stabil, transparent, flexibel und knickfest und überstehen einen Biegewinkel von 180° ohne Falznahtbruch. Diese Eigenschaften werden über Monate beibehalten.

Die erfindungsgemäßen Stärkederivate lassen sich in den beschriebenen Zusammensetzungen somit nicht nur nach den genannten üblichen Kunststoffherstellungsverfahren, sondern besonders einfach nach dem erfindungsgemäßen Gießverfahren zu Filmen und Folien verarbeiten. Die erfindungsgemäßen Erzeugnisse zeichnen sich sämtlich durch hinreichende Zugfestigkeit und Dehnbarkeit aus, wobei diese Eigenschaften auch bei über einen längeren Zeitraum gealterten Filmen oder Folien in gleichem Maß erhalten bleiben. Wie die nachfolgenden Ausführungsbeispiele zeigen, vermindert ein zunehmender Anteil des Weichmachers die Zugfestigkeit des Stärkederivatfilms, während die Dehnung deutlich erhöht wird.

Das Abbauverhalten, die Quellfähigkeit und die Alterungsbeständigkeit lassen sich durch den Feuchtigkeitsgehalt der Filme und Folien variieren. So tritt mit abnehmendem Feuchtigkeitsgehalt zunehmend Versprödung ein. Ebenso kann die Wasserlöslichkeit der Folien und Filme durch die Art des zugesetzten Weichmachers in bekannter Weise von wasserlöslich in kaltem Wasser über wasserlöslich in heißem Wasser bis lediglich langsam quellbar und schließlich wasserfest in kaltem Wasser eingestellt werden.

Die nach dem erfindungsgemäßen Gießverfahren herstellbaren Folien und Filme können in beliebigen Stärken hergestellt werden, wobei die gängige Filmdicke zwischen 20 - 100 µm beträgt. Die Filme sind mit Folienschreiber und Kugelschreiber beschriftbar und zeigen gegenüber Ölen und Fetten sowie gegenüber organischen Lösungsmitteln wie Aceton, Ethanol, Ester und chlorierten Lösungsmitteln Beständigkeit.

Gegenüber den bekannten Formmassen auf der Basis gewöhnlicher Amylosen bzw. Amylosederivaten besitzen die unter Verwendung der erfindungsgemäßen Zusammensetzungen hergestellten Formteile eine wesentlich bessere Transparenz und Klarheit. Sie sind außerdem einschließlich der eingesetzten Weichmacher wesentlich besser biologisch abbaubar. Die hergestellten Filme und Folien zeichnen sich weiterhin durch ökotoxikologische Unbedenklichkeit, Lebensmittel-, Boden- und Hautverträglichkeit aus, so daß sie problemlos für die Verpackung von Lebensmitteln verwendet werden können. Die Folien sind weiterhin lichtecht, anfärbbar sowie verkleb- und versiegelbar und nicht hygroskopisch. Die erfindungsgemäßen Folien können als Alternativmaterial zu anderen herkömmlichen Kunststoffen, wie beispielsweise Polyvinylchlorid und Polypropylen eingesetzt werden.

Die Erfindung wird durch die nachfolgenden Beispiele näher erläutert. Alle Prozentangaben beziehen sich jeweils auf die Gesamtmenge an Stärkederivat und Weichmacher.

### BEISPIEL 1

Stärkederivat: 90,9 Gew.-%.
Ethylenglykol: 9,1 Gew.-%.

In einem Rundkolben wurden 83,5 g Wasser mit 1,5 g Ethylenglykol versetzt und auf 90°C erwärmt. Unter kräftigem Rühren wurden in diese Lösung 15 g Stärkederivat langsam eingetragen. Anschließend wurde 60 Minuten lang auf 100°C erhitzt. Die heiße Lösung wurde durch eine Fritte filtriert und aus dem noch ca. 50°C warmen Filtrat wurde auf einer ebenen Oberfläche ein Film gegossen, der bei einer Temperatur von 40 bis 70°C im Trockenschrank getrocknet wurde. Nach dem Trocknen wurde eine klar durchsichtige elastische Folie mit einer Stärke von 100 µm von der Oberfläche abgezogen.

### BEISPIEL 2

Stärkederivat: 95,24 Gew.-%
Ethylenglykol: 4,76 Gew.-%

Nach der im vorstehenden Beispiel 1 beschriebenen Verfahrensweise wurde aus einer Lösung aus 84,25 g Wasser, 0,75 g Ethylenglykol und 15 g Stärkederivat eine Gießfolie hergestellt.

### BEISPIEL 3

Stärkederivat: 80 Gew.-%
Ethylenglykol: 20 Gew.-%

Nach der im vorstehenden Beispiel 1 beschriebenen Verfahrensweise wurde aus einer Lösung aus 81,25 g Wasser 3,75 g Ethylenglykol und 15 g Stärkederivat eine Gießfolie hergestellt.

### BEISPIEL 4

Stärkederivat: 95,24 Gew.-%
Triethylenglykol: 4,76 Gew.-%

Nach der im vorstehenden Beispiel 1 beschriebenen Verfahrensweise wurde aus einer Lösung, bestehend aus 84,25 g Wasser, 0,75 g Triethylenglykol und 15 g Stärkederivat (Hydroxyethylamylose), eine Gießfolie hergestellt.

### BEISPIEL 5

Stärkederivat: 90,9 Gew.-%
Polyvinylalkohol: 9,1 Gew.-%

Nach der in Beispiel 1 beschriebenen Verfahrensweise wurde aus einer Lösung aus 83,5 g Wasser, 1,5 g Polyvinylalkohol und 15 g Stärkederivat (Hydroxyethylamylose) eine Gießfolie hergestellt.

### BEISPIEL 6

Stärkederivat: 66,7 Gew.-%
Ethylenglykol: 33,3 Gew.-%

Nach der in Beispiel 1 beschriebenen Verfahrensweise wurde aus einer Lösung aus 77,5 g Wasser, 7,5 g Ethylenglykol und 15 g Stärkederivat (Hydroxyethylamylose) eine Gießfolie hergestellt.

### BEISPIEL 7

Stärkederivat: 90,9 Gew.-%
Triethylenglykol: 9,1 Gew.-%

Nach der in Beispiel 1 beschriebenen Verfahrensweise wurde aus einer Lösung aus 83,5 g Wasser, 1,5 g Triethylenglykol und 15 g Stärkederivat (Hydroxyethylamylose) eine Gießfolie hergestellt.

### BEISPIEL 8

Stärkederivat: 90,9 Gew.-%
Glycerin: 9,1 Gew.-%

Herstellung einer Gießfolie nach Beispiel 1, unter Verwendung von 9,1 Gew.-% Glycerin als Weichmacher.

### BEISPIEL 9

Stärkederivat: 83,4 Gew.-%
Glycerin: 16,6 Gew.-%

Herstellung einer Gießfolie nach Beispiel 1, unter Verwendung von 16,6 Gew.-% Glycerin als Weichmacher. Die Lösung wurde unter Anlegen von Vakuum filtriert.

### BEISPIEL 10

Stärkederivat: 80 Gew.-%
Glycerin: 20 Gew.-%

Herstellung einer Gießfolie nach Beispiel 1, unter Verwendung von 20 Gew.-% Glycerin als Weichmacher. Die Lösung wurde unter Anlegen von Vakuum filtriert.

Die Eigenschaften der in den vorstehenden Beispielen sowie in den Vergleichsbeispielen erhaltenen Gießfolien sind in der nachfolgenden Tabelle zusammengestellt.

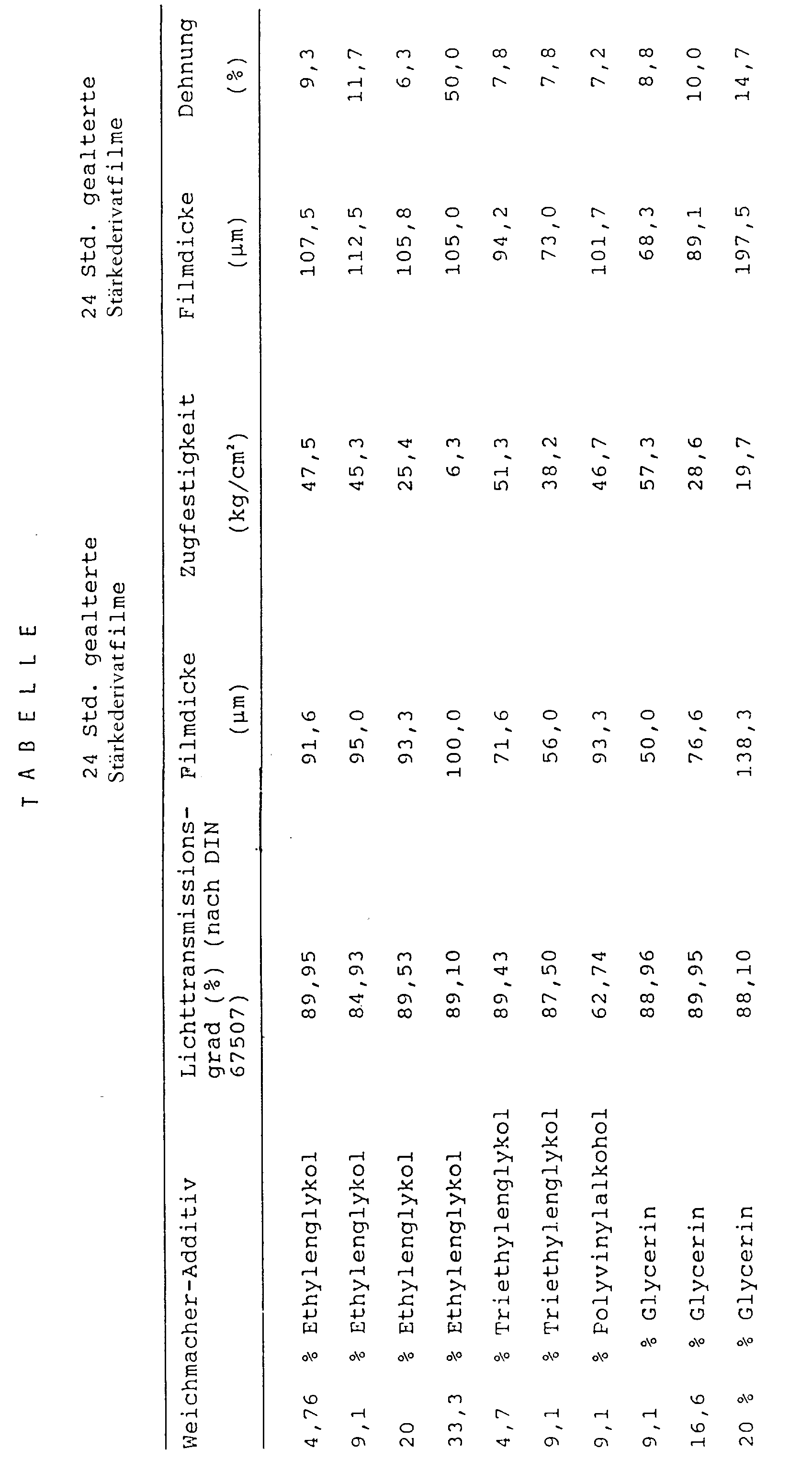

### BEISPIEL 11

Gewinnung von erfindungsgemäßem Stärkederivat durch Behandlung mit Formamid/Dichloressigsäure

120 g High-Amylose-Maisstärke Hylon VII (Fa. National Starch) werden in 588 g Formamidlösung, die 12 g Dichloressigsäure enthält, unter Rühren bei 145 - 150°C (Innentemperatur) gelöst und 30 Minuten bei dieser Temperatur gehalten. Anschließend wird auf 120°C (Innentemperatur) abgekühlt (Dauer: ca. 15 Minuten) und nochmals 30 Minuten bei dieser Temperatur gehalten. Danach wird die heiße Reaktionslösung auf ca. 300 ml Eiswasser gegossen. Zu dieser Mischung werden ca. 200 ml Ethanol zur Ausfällung des Produkts zugesetzt und das Produkt abgesaugt. Zur Reinigung wird der feste Rückstand in 1 Liter Wasser suspendiert und mit der gleichen Menge Aceton gefällt. Dieses Verfahren wird zweimal wiederholt. Nach dem Trocknen bei Raumtemperatur oder im Trockenschrank wird ein weißes voluminöses Pulver erhalten.
Ausbeute: 180 g Stärkederivate

### BEISPIEL 12

Gewinnung von erfindungsgemäßem Stärkederivat durch Derivatisierung in alkalischer Lösung

48,6 g High-Amylose-Maisstärke Hylon VII oder Eurylon 7 werden mit 150 ml Wasser vermengt und in 1200 ml 1n NaOH eingebracht. Zu dieser Lösung werden 13,2 g Ethylenoxid (verflüssigt) unter kräftigem Rühren langsam zugetropft, so daß die Innentemperatur 20°C nicht übersteigt und 8 h nach-gerührt. Hierbei wird die Stärke in niedrig oxethylierte Stärke überführt. Die Reaktionslösung wird mit konzentrierten HCl neutralisiert, auf ein Volumen von 600 ml eingeengt und 24 h gegen destilliertes Wasser dialysiert (Diaphragma: Visking Dialyse Tubing). Anschließend wird das Produkt mit Methanol gefällt und abgesaugt. Dabei werden störende Begleitstoffe wie insbesondere Salze und wasserlösliche Stärkebruchstücke entfernt. Zur Reinigung des Produkts wird in Aceton suspendiert, abgesaugt und getrocknet.
Ausbeute: 40 g Stärkederivat (Hydroxyethylanylose)

### BEISPIEL 13 (Vergleichsbeispiel)

Gewinnung von Hydroxyethylamylose durch Oxethylierung nach dem Verfahren der GB-A- 869 192

324 g Hylon VII werden in 1650 ml in NaOH portionsweise zugegeben und 2,5 Stunden gerührt. Danach werden 30 g Ethylenoxid (verflüssigt) langsam zugetropft und 2 1/4 Stunden nach-gerührt. Anschließend wird mit konzentrierter Schwefelsäure neutralisiert. Die neutralisierte Stärkelösung wird zu einer Lösung von 700 g MgSO₄ x 7 H₂O in 2000 ml Wasser zugegeben und 20 Stunden gerührt. Die entstehenden Trübstoffe werden abge-trennt (Zentrifuge). Die Lösung wird mit weiteren 2 Liter MgSO₄-Lösung (700 g MgSO₄ auf 2 Liter) versetzt. Nach 24 Stunden hat sich ein weißer, flockiger Niederschlag gebildet. Der Niederschlag wird abfiltriert und mit kaltem Wasser MgSO₄-frei gewaschen und getrocknet.
Ausbeute: 200 g Hydroxyethylamylose

### BEISPIEL 14

Gewinnung von Stärkederivat durch Derivatisierung in wäßrig-alkalischer Suspension

Zu einer Lösung aus 1200 ml Wasser, 13 g NaOH und 150 g Na₂SO₄ werden portionsweise 1000 g High-Amylose-Maisstärke Hylon VII oder Eurylon 7 oder High-Amylose-Erbsenstärke zugegeben und langsam 360 g Propylenoxid zugetropft. Anschließend wird unter kräftigem Rühren 8 h bei 40°C Innentemperatur gehalten. Danach wird mit 1n H₂SO₄ neutralisiert und abgesaugt. Das Produkt wird in ca. 2 Liter Methanol suspendiert und erneut abgesaugt. Dieser Vorgang wird zweimal wiederholt. Das isolierte Produkt wird an der Luft oder im Trockenschrank (40°C) getrocknet.
Ausbeute: 1215 g Stärkederivat (Hydroxypropylamylose)

### BEISPIEL 15

Herstellung von Thermoplastfolie

20 g der nach den Beispielen 11, 12 und 14 erhaltenen Stärkederivate werden mit 4,45 g Ethylenglykol als Weichmacher im Knetwerk innig vermischt und bei 100°C, 10 t Preßdruck und 30 Minuten Preßzeit auf der Thermopresse zu einer dünnen, transparenten und elastischen Folie gepreßt.

## Patentansprüche (Patentansprüche für folgende(n) Vertragsstaat(en): DE, NL, GB, CH, LI, FR, LU, SE, AT, BE, IT, DK)

1. Aus Stärken mit einem Amylosegehalt oberhalb 65 Gew.-% durch Behandlung mit Formamid/Dichloressigsäureoderdurch Hydroxyalkylderivatisierung erhältliche Derivate von Stärke, wobei diese Stärkederivate
(a) in kaltem Wasser quellbar, aber nicht löslich sind und
(b) beim Erhitzen der Stärkederivate in Wasser unter Rühren oberhalb 80 °C unter Atmosphärendruck ohne Bildung von Gelen homogene fließfähige Quasilösungen ergeben, wobei dieser Zustand beim Abkühlen auf eine Temperatur von 50 °C ohne Gelbildung und Retrogradation mindestens 5 Minuten erhalten bleibt, und
wobei die Lösung in einer Konzentration von 5 bis 25 % auf einer planen Unterlage bei einer Spaltbreite von 100 bis 700 µm rakelfähig ist, und wobei die durch Hydroxyalkylderivatisierunghergestellten Stärkederivate einen Substitutionsgrad von 0,05 bis 0,15 aufweisen.

2. Stärkederivate nach Anspruch 1, dadurch gekennzeichnet, daß die durch Hydroxyalkylderivatisierung hergestellten Derivate Hydroxyethylderivate oder Hydroxypropylderivate umfassen.

3. Zusammensetzung enthaltend Stärkederivate nach einem der Ansprüche 1 oder 2 zur Herstellung von Kunststoffen, dadurch gekennzeichnet, daß die Zusammensetzung 60 bis 97 Gew.-% der Stärkederivate und 3 bis 40 Gew.-% eines Weichmachers enthält.

4. Zusammensetzung nach Anspruch 3, dadurch gekennzeichnet, daß die Zusammensetzung 70 bis 95 Gew.-% der Stärkederivate und 5 bis 30 Gew.-% eines Weichmachers enthält.

5. Zusammensetzung nach Anspruch 3, dadurch gekennzeichnet, daß die Zusammensetzung 80 bis 85 Gew.-% der Stärkederivate und 15 bis 20 Gew.-% eines Weichmachers enthält.

6. Zusammensetzung nach einem der Ansprüche 3 bis 5, dadurch gekennzeichnet, daß der Weichmacher aus Glycerin, Diethylenglycol, Triethylenglycol, Sorbit, Polyvinylalkohol oder Gemischen davon ausgewählt ist.

7. Verfahren zur thermoplastischen Herstellung von Formteilen, insbesondere von Filmen und Folien in an sich bekannter Weise, dadurch gekennzeichnet, daß man die Zusammensetzung nach einem der Ansprüche 3 bis 6 einsetzt.

8. Verfahren zur Herstellung von Formteilen, insbesondere von Filmen und Folien aus Stärkederivaten unter Verwendung der Zusammensetzung nach einem der Ansprüche 3 bis 6, dadurch gekennzeichnet, daß die Stärkederivate , gegebenenfalls unter Erwärmen, in einer Mischung aus einem Weichmacher und einem geeigneten Lösungsmittel gelöst, die erhaltene Lösung filtriert und die Folie durch Gießen der Lösung auf eine geeignete Unterlage und anschließendes Entfernen des Lösungsmittels erhalten wird.

9. Verfahren nach Anspruch 8, dadurch gekennzeichnet, daß man als Lösungsmittel Wasser einsetzt.

10. Verfahren zur Herstellung von Stärkederivaten nach Anspruch 1, dadurch gekennzeichnet, daß man High-Amylose-Maisstärke oder High-Amylose-Erbsenstärke mit Amylosegehalten oberhalb von 65 % durch Behandlung mit einer Formamidlösung, die 2 % Dichloressigsäure enthält, in einem Schritt aufschließt und chemisch verändert.

11. Formteile, dadurch gekennzeichnet, daß sie unter Verwendung von Stärkederivaten nach einem der Ansprüche 1, 2 oder 10 hergestellt sind.

## Patentansprüche (Patentansprüche für folgende(n) Vertragsstaat(en): ES)

1. Verfahren zur Herstellung von aus Stärken mit einem Amylosegehalt oberhalb 65 Gew.-% erhältlichen Derivate von Stärke, wobei diese Stärkederivate
(a) in kaltem Wasser quellbar, aber nicht löslich sind und
(b) beim Erhitzen der Stärkederivate in Wasser unter Rühren oberhalb 80 °C unter Atmosphärendruck ohne Bildung von Gelen homogene fließfähige Quasilösungen ergeben, wobei dieser Zustand beim Abkühlen auf eine Temperatur von 50 °C ohne Gelbildung und Retrogradation mindestens 5 Minuten erhalten bleibt, und wobei die Lösung in einer Konzentration von 5 bis 25 % auf einer planen Unterlage bei einer Spaltbreite von 100 bis 700 µm rakelfähig ist,
wobei die Stärken mit Formamid/Dichloressigsäure behandelt werden oder eine Hydroxyalkylderivatisierung der Stärke durchgeführt wird, und wobei die durch Hydroxyalkylderivatisierung hergestellten Stärkederivate einen Substitutionsgrad von 0,05 bis 0,15 aufweisen.

2. Verfahren nach Anspruch 1, dadurch gekennzeichnet, daß die durch Hydroxyalkylderivatisierunghergestellten Derivate Hydroxyethylderivate oder Hydroxypropylderivate umfassen.

3. Verfahren zur Herstellung einer Zusammensetzung enthaltend Stärkederivate nach einem der Ansprüche 1 oder 2 zur Herstellung von Kunststoffen, dadurch gekennzeichnet, daß man die Stärkederivate mit dem Weichmacher mischt, und wobei die Zusammensetzung 60 bis 97 Gew.-% an Stärkederivaten und 3 bis 40 Gew.-% eines Weichmachers enthält.

4. Verfahren nach Anspruch 3, dadurch gekennzeichnet, daß die Zusammensetzung 70 bis 95 Gew.-% der Stärkederivate und 5 bis 30 Gew.-% eines Weichmachers enthält.

5. Verfahren nach Anspruch 3, dadurch gekennzeichnet, daß die Zusammensetzung 80 bis 85 Gew.-% der Stärkederivate und 15 bis 20 Gew.-% eines Weichmachers enthält.

6. Verfahren nach einem der Ansprüche 3 bis 5, dadurch gekennzeichnet, daß man den Weichmacher aus Glycerin, Diethylenglycol, Triethylenglycol, Sorbit, Polyvinylalkohol oder Gemischen davon auswählt.

7. Verfahren zur thermoplastischen Herstellung von Formteilen, insbesondere von Filmen und Folien in an sich bekannter Weise, dadurch gekennzeichnet, daß man die Zusammensetzung nach einem der Ansprüche 3 bis 6 einsetzt.

8. Verfahren zur Herstellung von Formteilen, insbesondere von Filmen und Folien aus Stärkederivaten unter Verwendung der Zusammensetzung nach einem der Ansprüche 3 bis 6, dadurch gekennzeichnet, daß die Stärkederivate, gegebenenfalls unter Erwärmen, in einer Mischung aus einem Weichmacher und einem geeigneten Lösungsmittel gelöst, die erhaltene Lösung filtriert und die Folie durch Gießen der Lösung auf eine geeignete Unterlage und anschließendes Entfernen des Lösungsmittels erhalten wird.

9. Verfahren nach Anspruch 8, dadurch gekennzeichnet, daß man als Lösungsmittel Wasser einsetzt.

10. Verfahren zur Herstellung von Stärkederivaten nach Anspruch 1, dadurch gekennzeichnet, daß man High-Amylose-Maisstärke oder High-Amylose-Erbsenstärke mit Amylosegehalten oberhalb von 65 % durch Behandlung mit einer Formamidlösung, die 2 % Dichloressigsäure enthält, in einem Schritt aufschließt und chemisch verändert.

11. Verfahren zur Herstellung von Formteilen, dadurch gekennzeichnet, daß die Formteile unter Verwendung von Stärkederivaten nach einem der Ansprüche 1, 2 oder 10 hergestellt werden.

## Claims (Claims for the following Contracting State(s): DE, NL, GB, CH, LI, FR, LU, SE, AT, BE, IT, DK)

1. Starch derivatives obtainable from starches having an amylose content above 65% by weight by treatment with formamide/ dichloroacetic acid or by hydroxyalkyl derivatization, wherein these starch derivatives
(a) are swellable but not soluble in cold water and
(b) produce homogeneous flowable quasi solutions during heating of the starch derivatives in water with stirring above 80°C under atmospheric pressure without gel formation, wherein this state is maintained for at least 5 minutes during cooling to a temperature of 50°C without gel formation and retrogradation, and
wherein the solution is spreadable on a plane substrate with a gap width of 100 to 700 µm in a concentration of 5 to 25% and wherein the starch derivatives produced by hydroxyalkyl derivatization have a degree of substitution of 0.05 to 0.15.

2. Starch derivatives according to claim 1, characterized in that the derivatives produced by hydroxyalkyl derivatization comprise hydroxyethyl derivatives or hydroxypropyl derivatives.

3. Composition containing starch derivatives according to one of claims 1 or 2 for the production of plastics materials, characterized in that the composition contains 60 to 97% by weight of the starch derivatives and 3 to 40% by weight of a plasticizer.

4. Composition according to claim 3, characterized in that the composition contains 70 to 95% by weight of the starch derivatives and 5 to 30% by weight of a plasticizer.

5. Composition according to claim 3, characterized in that the composition contains 80 to 85% by weight of the starch derivatives and 15 to 20% by weight of a plasticizer.

6. Composition according to one of claims 3 to 5, characterized in that the plasticizer is selected from glycerol, diethyleneglycol, triethyleneglycol, sorbitol, polyvinylalcchol or mixtures thereof.

7. Process for the thermoplastic production of mouldings, in particular of films and sheets, in a known manner, characterized in that the composition according to one of claims 3 to 6 is used.

8. Process for producing mouldings, in particular films and sheets,from starch derivatives using the composition according to one of claims 3 to 6, characterized in that the starch derivatives are dissolved in a mixture of a plasticizer and a suitable solvent, optionally with heating, the solution obtained is filtered and the sheet is obtained by pouring the solution onto a suitable substrate and subsequent removal of the solvent.

9. Process according to claim 8, characterized in that water is used as solvent.

10. Process for producing starch derivatives according to claim 1, characterized in that high-amylose cornstarch or high-amylose peastarch with amylose contents above 65% are digested and chemically changed in one stage by treatment with a formamide solution containing 2% of dichloroacetic acid.

11. Mouldings, characterized in that they are produced using starch derivatives according to one of claims 1, 2 or 10.

## Claims (Claims for the following Contracting State(s): ES)

1. Process for producing starch derivatives obtainable from starches having an amylose content above 65% by weight, wherein these starch derivatives
(a) are swellable but not soluble in cold water and
(b) produce homogeneous flowable quasi solutions during heating of the starch derivatives in water with stirring above 80°C under atmospheric pressure without gel formation, wherein this state is maintained for at least 5 minutes during cooling to a temperature of 50°C without gel formation and retrogradation, and
wherein the solution is spreadable on a plane substrate with a gap width of 100 to 700 µm in a concentration of 5 to 25%,
wherein the starches are treated with formamide/dichloroacetic acid or hydroxyalkyl derivatization of the starch is carried out, and wherein the starch derivatives produced by hydroxyalkyl derivatization have a degree of substitution of 0.05 to 0.15.

2. Process according to claim 1, characterized in that the derivatives produced by hydroxyalkyl derivatization comprise hydroxyethyl derivatives or hydroxypropyl derivatives.

3. Process for producing a composition containing starch derivatives according to one of claims 1 or 2 for producing plastics materials, characterized in that the starch derivatives are mixed with the plasticizer and wherein the composition contains 60 to 97% by weight of starch derivatives and 3 to 40% by weight of a plasticizer.

4. Composition according to claim 3, characterized in that the composition contains 70 to 95% by weight of the starch derivatives and 5 to 30% by weight of a plasticizer.

5. Composition according to claim 3, characterized in that the composition contains 80 to 85% by weight of the starch derivatives and 15 to 20% by weight of a plasticizer.

6. Composition according to one of claims 3 to 5, characterized in that the plasticizer is selected from glycerol, diethyleneglycol, triethyleneglycol, sorbitol, polyvinylalcohol or mixtures thereof.

7. Process for the thermoplastic production of mouldings, in particular of films and sheets, in a known manner, characterized in that the composition according to one of claims 3 to 6 is used.

8. Process for producing mouldings, in particular films and sheets,from starch derivatives using the composition according to one of claims 3 to 6, characterized in that the starch derivatives are dissolved in a mixture of a plasticizer and a suitable solvent, optionally with heating, the solution obtained is filtered and the sheet is obtained by pouring the solution onto a suitable substrate and subsequent removal of the solvent.

9. Process according to claim 8, characterized in that water is used as solvent.

10. Process for producing starch derivatives according to claim 1, characterized in that high-amylose cornstarch or high-amylose peastarch with amylose contents above 65% are digested and chemically changed in one stage by treatment with a formamide solution containing 2% of dichloroacetic acid.

11. Process for producing mouldings, characterized in that the mouldings are produced using starch derivatives according to one of claims 1, 2 or 10.

## Revendications (Revendications pour l'(les) Etat(s) contractant(s) suivant(s): AT, BE, CH, DE, DK, FR, GB, IT, LI, LU, NL, SE)

1. Dérivés d'amidon, qui sont accessibles à partir d'amidons présentant une teneur en amylose supérieure à 65 % en poids, par traitement avec un mélange de formamide et d'acide dichloroacétique ou par hydroxyalkylation, et qui :
a) peuvent gonfler dans l'eau froide, mais ne peuvent pas s'y dissoudre, et
b) donnent, lorsqu'on les chauffent dans de l'eau au-dessus de 80°C, sous agitation et sous la pression atmosphérique, sans former de gels, des quasi-solutions homogènes et fluides, état dans lequel ils se maintiennent pendant au moins 5 minutes, sans formation de gel ni rétrogradation, lorsqu'on les refroidit à 50°C,
la solution, pour une concentration de 5 à 25 %, pouvant être étalée sur un substrat plan à l'aide d'une racle réglée à une hauteur de 100 à 700 µm, et le degré de substitution des dérivés d'amidon préparés par hydroxyalkylation valant de 0,05 à 0,15.

2. Dérivés d'amidon conformes à la revendication 1, caractérisés en ce que les dérivés d'amidon préparés par hydroxyalkylation englobent des dérivés hydroxyéthylés ou hydroxypropylés.

3. Composition contenant des dérivés d'amidon conformes à l'une des revendications 1 et 2, destinée à la préparation de matières synthétiques, caractérisée en ce qu'elle contient de 60 à 97 % en poids de dérivés d'amidon et de 3 à 40 % en poids d'un plastifiant.

4. Composition conforme à la revendication 3, caractérisée en ce qu'elle contient de 70 à 95 % en poids de dérivés d'amidon et de 5 à 30 % en poids d'un plastifiant.

5. Composition conforme à la revendication 3, caractérisée en ce qu'elle contient de 80 à 85 % en poids de dérivés d'amidon et de 15 à 20 % en poids d'un plastifiant.

6. Composition conforme à l'une des revendications 3 à 5, caractérisée en ce que le plastifiant est choisi parmi la glycérine, le diéthylèneglycol, le triéthylèneglycol, le sorbitol, le poly(alcool vinylique) et leurs mélanges.

7. Procédé de fabrication par voie thermoplastique de pièces moulées, en particulier de films ou de feuilles de façon connue, caractérisé en ce qu'on utilise une composition conforme à l'une des revendications 3 à 6.

8. Procédé de fabrication de pièces moulées, en particulier de films ou de feuilles, à partir de dérivés d'amidon, dans lequel on utilise une composition conforme à l'une des revendications 3 à 6, caractérisé en ce qu'on dissout les dérivés d'amidon, éventuellement à chaud, dans un mélange d'un plastifiant et d'un solvant approprié, on filtre la solution obtenue, et on forme une feuille en étalant la solution sur un substrat convenable et en chassant ensuite le solvant.

9. Procédé conforme à la revendication 8, caractérisé en ce qu'on utilise de l'eau comme solvant.

10. Procédé de préparation de dérivés d'amidon conformes à la revendication 1, caractérisé en ce qu'on dégrade et modifie chimiquement, en une seule étape, un amidon de maïs à haute teneur en amylose ou un amidon de pois à haute teneur en amylose, qui contient plus de 65 % d'amylose, en le traitant avec une solution de formamide qui contient 2 % d'acide dichloroacétique.

11. Pièces moulées, caractérisées en ce qu'on les a préparées en utilisant des dérivés d'amidon conformes à l'une des revendications 1, 2 et 10.

## Revendications (Revendications pour l'(les) Etat(s) contractant(s) suivant(s): ES)

1. Procédé de préparation de dérivés d'amidon qui sont accessibles à partir d'amidons présentant une teneur en amylose supérieure à 65 % en poids, et qui :
a) peuvent gonfler dans l'eau froide, mais ne peuvent pas s'y dissoudre, et
b) donnent, lorsqu'on les chauffent dans de l'eau au-dessus de 80°C, sous agitation et sous la pression atmosphérique, sans former de gels, des quasi-solutions homogènes et fluides, état dans lequel ils se maintiennent pendant au moins 5 minutes, sans formation de gel ni rétrogradation, lorsqu'on les refroidit à 50°C,
la solution, pour une concentration de 5 à 25 %, pouvant être étalée sur un substrat plan à l'aide d'une racle réglée à une hauteur de 100 à 700 µm,
procédé dans lequel on traite les amidons avec un mélange de formamide et d'acide dichloroacétique ou on les soumet à une hydroxyalkylation, le degré de substitution des dérivés d'amidon préparés par hydroxyalkylation valant de 0,05 à 0,15.

2. Procédé conforme à la revendication 1, caractérisé en ce que les dérivés d'amidon préparés par hydroxyalkylation englobent des dérivés hydroxyéthylés ou hydroxypropylés.

3. Procédé de préparation d'une composition contenant des dérivés d'amidon préparés selon l'une des revendications 1 et 2, destinée à la préparation de matières synthétiques, caractérisé en ce qu'on mélange les dérivés d'amidon avec un plastifiant et en ce que la composition contient de 60 à 97 % en poids de dérivés d'amidon et de 3 à 40 % en poids du plastifiant.

4. Procédé conforme à la revendication 3, caractérisé en ce que la composition contient de 70 à 95 % en poids de dérivés d'amidon et de 5 à 30 % en poids du plastifiant.

5. Procédé conforme à la revendication 3, caractérisé en ce que la composition contient de 80 à 85 % en poids de dérivés d'amidon et de 15 à 20 % en poids du plastifiant.

6. Procédé conforme à l'une des revendications 3 à 5, caractérisé en ce que le plastifiant est choisi parmi la glycérine, le diéthyléneglycol, le triéthylèneglycol, le sorbitol, le poly(alcool vinylique) et leurs mélanges.

7. Procédé de fabrication par voie thermoplastique de pièces moulées, en particulier de films ou de feuilles de façon connue, caractérisé en ce qu'on utilise une composition préparée selon l'une des revendications 3 à 6.

8. Procédé de fabrication de pièces moulées, en particulier de films ou de feuilles, à partir de dérivés d'amidon, dans lequel on utilise une composition préparée selon l'une des revendications 3 à 6, caractérisé en ce qu'on dissout les dérivés d'amidon, éventuellement à chaud, dans un mélange d'un plastifiant et d'un solvant approprié, on filtre la solution obtenue, et on forme une feuille en étalant la solution sur un substrat convenable et en chassant ensuite le solvant.

9. Procédé conforme à la revendication 8, caractérisé en ce qu'on utilise de l'eau comme solvant.

10. Procédé de préparation de dérivés d'amidon, conforme à la revendication 1, caractérisé en ce qu'on dégrade et modifie chimiquement, en une seule étape, un amidon de maïs à haute teneur en amylose ou un amidon de pois à haute teneur en amylose, qui contient plus de 65 % d'amylose, en le traitant avec une solution de formamide qui contient 2 % d'acide dichloroacétique.

11. Procédé de fabrication de pièces moulées, caractérisé en ce qu'on fabrique ces pièces en utilisant des dérivés d'amidon préparés selon l'une des revendications 1, 2 et 10.
